# EUROPEAN PATENT APPLICATION

(11) **EP 4 764 869 A1**
(43) Date of publication of application: **24.06.2026**
(21) Application number: 24220921.1
(22) Date of filing: 18.12.2024
(51) Int. Cl.: G06F 11/3668, G06F 16/29, G06N 3/00

(54) **A METHOD FOR EXPANDING A SCENARIO DATABASE**

(71) Applicant: Zenseact AB, 417 56 Gothenburg (SE)
(72) Inventor: GYLLENHAMMAR, Magnus, 435 43 Pixbo (SE); TONDERSKI, Adam, 417 51 Göteborg (SE); HESS, Georg, 413 25 Göteborg (SE); PETERSSON, Christoffer, 426 58 Västra Frölunda (SE); LUVÖ, Thomas, 443 60 Stenkullen (SE)
(74) Representative: Zacco Sweden AB

(57) **Abstract**

The herein disclosed technology relates to a method (100) for expanding a scenario database. The scenario database comprises a plurality of existing scenario samples, each scenario sample comprising sensor data depicting a surrounding environment of a vehicle over a period of time, wherein each scenario sample is associated with a scenario embedding representing the scenario sample in a multi-dimensional space. The method (100) comprises obtaining (S102) an indication of an empty volume in the multi-dimensional space, wherein the empty volume is a volume not covered by the plurality of existing scenario samples of the scenario database; transmitting (S106) a data collection request in view of the empty volume to one or more vehicles of a fleet of vehicles; receiving (S108), from a vehicle of the fleet of vehicles, data indicative of a recorded scenario matching the data collection request; and storing (S110) the received data indicative of the recorded scenario to the plurality of existing scenario samples of the scenario database. The disclosed technology further related to a computing device (200) thereof.

## Description

### TECHNICAL FIELD

The present disclosed technology relates to the field of automated driving system development. In particular, it is related to methods and devices for expanding a scenario database for use in development of automated driving systems.

### BACKGROUND

One of the central tenets for verification and validation of Automated Driving Systems (ADSs) is the use of scenario-based testing. Such testing is used to systematically evaluate the system's performance across a wide range of driving scenarios, including rare and challenging situations that are statistically possible, but would require intractable amounts for real world driving to experience. These scenarios are important for exposing the potential system weaknesses and ensuring robustness in diverse and unpredictable environments.

A core component of scenario-based testing is the database, which stores a collection of recorded driving scenarios. Construction of such a database presents several challenges. The database must capture not only common driving situations but also rare edge cases, such as extreme weather conditions, unexpected pedestrian behavior, unusual traffic patterns, etc. Ensuring statistical representativeness of all possible scenarios is therefore one challenge. To do this, an efficient and smart population of the scenario database is desirable. When extending a scenario database, it is essential to identify which scenarios are needed to complement the existing ones in the database. This can involve recognizing which scenarios that may be "missing" and could enrich the current database, while also determining which scenarios are already well-covered. Avoiding redundant or irrelevant data helps prevent overwhelming the database and ensures efficient use of bandwidth and cloud infrastructure.

There is also needed a system for how to actually obtain these complementing scenario samples, considering available resources, time, and likelihood of a scenario actually occurring. For example, real-world data collection can be costly and may lack the diversity necessary for rare scenarios. As another example, synthetic sensor data generation can mitigate the problem of the low occurrence of rare scenarios. However, it can instead risk introducing inaccuracies or reduce the reliability in terms of reflecting real-world driving conditions, thereby reducing its relevance and usefulness in testing of the ADS. In other words, its effectiveness can be hampered by uncertainties regarding the dependability of synthetic data and its ability to accurately replicate real-world sensor stimuli, if not carefully validated.

Existing methods for scenario database population or extension often fall short in one or more of these areas. There is therefore a need for improvements in this field, to provide for comprehensive and reliable coverage of statistically possible scenarios while considering scenario diversity and computational efficiency. Such advancements would enable more comprehensive testing of ADSs, ultimately contributing to the capability, reliability and performance of automated driving systems, or any functions thereof.

### SUMMARY

The herein disclosed technology seeks to mitigate, alleviate or eliminate one or more of the above-identified deficiencies and disadvantages in the prior art to address various problems relating to forming of a scenario database for scenario-based development of features or functions relating to automated driving systems, ADSs. More specifically, the disclosed technology addresses issues relating to how to expand a scenario database of existing scenario samples in an improved and more efficient way. By the disclosed technology, an improved way towards depleting, or exhausting, a space of possible scenarios, can be provided. Various aspects and embodiments of the disclosed technology are defined below and in the accompanying independent and dependent claims.

According to a first aspect, there is provided a computer-implemented method for expanding a scenario database. The scenario database comprises a plurality of existing scenario samples. Each scenario sample comprising sensor data depicting a surrounding environment of a vehicle over a period of time. Each scenario sample is associated with a scenario embedding representing the scenario sample in a multi-dimensional space. The method comprises obtaining an indication of an empty volume in the multi-dimensional space. The empty volume is a volume not covered by the plurality of existing scenario samples of the scenario database. The method further comprises transmitting a data collection request in view of the empty volume to one or more vehicles of a fleet of vehicles. The method further comprises receiving, from a vehicle of the fleet of vehicles, data indicative of a recorded scenario matching the data collection request. The method further comprises storing the received data indicative of the recorded scenario to the plurality of existing scenario samples of the scenario database. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for expanding a scenario database. The scenario database comprises a plurality of existing scenario samples. Each scenario sample comprising sensor data depicting a surrounding environment of a vehicle over a period of time. Each scenario sample is associated with a scenario embedding representing the scenario sample in a multi-dimensional space. The computing device comprises control circuitry. The control circuitry is configured to obtain an indication of an empty volume in the multi-dimensional space. The empty volume is a volume not covered by the plurality of existing scenario samples of the scenario database. The control circuitry is further configured to transmit a data collection request in view of the empty volume to one or more vehicles of a fleet of vehicles. The control circuitry is further configured to receive, from a vehicle of the fleet of vehicles, data indicative of a recorded scenario matching the data collection request. The control circuitry is further configured to store the received data indicative of the recorded scenario to the plurality of existing scenario samples of the scenario database. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the scenario database can be expanded in an improved and more efficient way. By considering the transformation volume of scenario samples, a more efficient utilization of bandwidth and other computational resources can be achieved. This is while considering the realism and dependability of synthetic sensor data that can be generated through transformations of the existing scenario samples. It may further provide for a more targeted data collection approach. In other words, an improved way of identifying holes in the existing scenario database, as well as understanding how newly recorded/experienced scenarios can fill these holes, can be provided. This can e.g. find improvements in terms of bandwidth utilization and data restrictions.

Even further, an advantage of some embodiments may be that a priority level can provide for more efficiently managing and transmission of vast amounts of data from a fleet of vehicles. This can be achieved partly by the balancing between data richness and bandwidth limitations. This can further be seen as a dynamic, scenario-value-based hierarchical data collection system. More specifically, a hierarchical approach can optimize bandwidth consumption by adjusting the detail level of transmitted data based on scenario importance, ensuring valuable data is prioritized.

By adaptively providing data at the appropriate level of detail, the system can scale to more data, from a larger fleet, ultimately improving the performance and safety of the ADS. It may further limit the transmission of full sensor data to high priority scenarios, which reduces the overall data storage and transmission costs. Even further, it may ensure that resources are spent to capture the most relevant events when really needed. Thus, sending all raw data for truly valuable sequences.

An advantage of some embodiments is that more exhaustive scenario-based development of ADS functions can be more readily available and enabled in a more efficient way. By performing more exhaustive scenario-based testing and validation, the robustness, reliability, dependability and overall performance of the ADS, across a wider range of scenarios, can be achieved.

An advantage of some embodiments is that the need for data transmission from a fleet of vehicles can be reduced, while still enabling accurate and reliable testing of the ADS. This may be due to the fact that less raw sensor data is needed to exhaust the scenario space.

An advantage of some embodiments is that it enables scenarios that are close to already collected data, but may take months/years to collect from driving in the real-world, to be generated.

An advantage of some embodiments is that the scenario space can be exhausted with less collected data.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2 is a schematic illustration of a computing device, in accordance with some embodiments;
Figure 3 is a schematic illustration of a vehicle, in accordance with some embodiments;
Figure 4 illustrates, by way of example, a mapping between scenario samples and a multi-dimensional space;
Figure 5 illustrates, by way of example, scenario samples in a multi-dimensional space;
Figure 6A and 6B illustrates, by way of example, how a scenario space can be filled.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first machine learning model could be termed a second machine learning model, and, similarly, a second machine learning model could be termed a first machine learning model, without departing from the scope of the embodiments. The first machine learning model and the second machine learning model are both machine learning model, but they are not the same machine learning model.

As used herein, the wording "one or more of" a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

As used herein, the term "in response to" may be construed to mean "when" or "upon" or "if" depending on the context. Similarly, the phrase "in response to successfully [identifying the at least one scenario sample]" may be construed as "when it has been determined that the at least one scenario sample has been identified", "in an instance of the at least one scenario sample has been identified", "upon the at least one scenario sample having been identified", or similar.

### Overview

As explained in the foregoing, the disclosed technology relates to expanding (or extending) a scenario database comprising a plurality of existing scenario samples. The disclosed technology is at least partly based upon analyzing the already existing data in the scenario database in view of to what extent existing scenario samples can be transformed, by a transformation system, into modified scenarios. More specifically, the disclosed technology is at least partly based on how a transformation system can generate synthetic sensor data by transformations of sensor data of the already existing scenario samples, in a dependable way. Moreover, this can be combined with a query system for requesting relevant sensor data. The expanded scenario database can then be used in development of automated driving systems (ADSs). The disclosed technology is thus at least partly based on the idea of how to identity empty volumes (or holes) in the existing scenario database in an associated scenario space while considering the transformation volumes of the existing samples, and/or understanding how recorded scenario samples fills such empty volumes given available transformations. In other words, identifying how the received data can be transformed to fill the empty volumes, and understanding to what extent it overlaps existing data. More specifically, the disclosed technology can be enabled to improve data collection by leveraging an understanding of how transformations of both existing and newly collected data can fill gaps within the scenario space. Instead of trying to gather all data, resources can be focused on collecting the most critical data-targeting the gaps (i.e. empty volumes) in the scenario space, which cannot be filled by synthetically generated data from the existing data samples.

The disclosed technology further enables for depleting or exhausting the space of possible scenarios in a more efficient manner than simply relying on a vehicle fleet to experience all possible scenarios. The technology relies on the fact that small perturbations or transformations of recorded sensor data can be carried out, while achieving desirable dependability of the generated synthetic sensor data. Dependability in this context, refers to the generated synthetic sensor data appearing realistic (i.e. look and feel like real-world sensor data), to a perception system applied to the synthetic sensor data. For instance, it is desirable to have similar output from the perception system when applied to real or synthetic data, given they depict the same scene. The dependability of the synthetic sensor data may refer to a number of different aspects, which can indicate an overall quality and trustworthiness of the synthetic sensor data in representing real-world scenarios, and supporting robust and reliable testing and development of ADSs (or any sub-system thereof). The dependability may e.g. encompass validity, reliability, and/or accuracy of the synthetic sensor data. In other words, the dependability may be seen as an umbrella term of one or more aspects. More specifically, the validity may refer to an extent to which the synthetic sensor data reflects (or aligns with) the characteristics of real-world sensor data or scenario. In other words, it may be a measure of how trustworthy the synthetic sensor data is for its intended purpose without introducing artifacts or inconsistencies that could lead to erroneous conclusions. The reliability may reflect a level of consistency in the generated synthetic sensor data. In other words, the reliability can mean that the generated data consistently exhibits the same characteristics and behavior under similar conditions, ensuring reproducibility and predictability in its use for testing or analysis. The accuracy may refer to how well the synthetic sensor data matches a scenario which it is supposed to depict. In other words, how close it is to the desired or requested scenario.

Recent examples of techniques for transforming (or perturbing) data (in the present context sensor data) includes rendering-based approaches which able to shift the perspective of images or even move/shift, add or remove objects in a scene, and generative models to change the texture and look of certain objects or portions of the scene. Examples of rendering-based approaches are Neural Radiance Fields (NeRFs) and Gaussian splatting. Generative models can refer to Generative Adversarial Networks (GANs), Denoising Diffusion Probabilistic Models (DDPMs), Normalizing Flows, and such. Perturbations or transformations using such methods can render an alternative scenario or scene from an input of original raw data. As realized by the disclosed technology, this alternative scenario can be made to look realistic, assuming reasonable amplitudes on the transformations carried out, and can thus provide means to render/generate synthetic data based off a sample of raw data.

The disclosed technology couples such a transformation system with a query system for new scenarios, which further considers a space of modified scenarios that are reachable from existing samples, through such transformations. To do this, the disclosed technology leverages a scenario space (also referred to as multi-dimensional space), as will be further explained below.

### Definitions

Throughout the present disclosure, reference is made to different machine learning techniques, generally referred to as machine learning models (or just "models" for short). By this, it is herein meant any form of machine learning algorithm, such as deep learning models, neural networks, or the like, which is able to learn and adapt from input data and subsequently make predictions, decisions, classifications or any other relevant task based on new data.

Deployment of a machine learning model typically involves a training phase where the model learns from labeled or unlabeled training data to achieve accurate predictions during the subsequent inference phase. The training data (and input data during inference) may e.g. be an image, or sequence of images, LIDAR data (i.e. a point cloud), radar data, or any other form of data. Furthermore, the training/input data may comprise a combination or fusion of one or more different data types.

Additionally, or in combination, it may comprise a combination or fusion of two or more instances of the same data types, such as two or more images from different cameras.

The machine learning model may be implemented in some embodiments using publicly available suitable software development machine learning code elements, for example, such as those which are available in PyTorch, TensorFlow, and Keras, or in any other suitable software development platform, in any manner known to be suitable to someone of ordinary skill in the art.

An example of such machine learning technique referred to below, is so-called Neural Radiance Fields (NeRFs). NeRFs is one example of a way of offering a representation of a scenario that is learnable (e.g. through backpropagation), and be used with a rendering process. The NeRF is thus an example of a learned rendering-based scenario representation. As the name suggest, NeRFs utilizes radiance fields, and is thus a radiance based technique. Moreover, the NeRF is neural based in the sense that it is constructed (at least partly) by neural networks. NeRFs can e.g. enable rendering of novel view-points in a recorded scenario, or changing presence or positions of objects in the scenario.

In more detail, a NeRF is a neural network that can reconstruct three-dimensional scenes from a partial set of two-dimensional images (or other sensor data types). The NeRF can learn the scene geometry, objects, and angles of a particular scene. This can be learned e.g. from how light traverses the scene. Then it can be used in rendering of photorealistic 3D (or 2D) views from different viewpoints, as well as of different sensor data types. The views can be rendered as 2D or 3D views. The views can further be generated with one dimension for time, to generate dynamic scenarios. The views can thus be rendered as 4D views as well. A NeRF is typically constructed of a so-called multilayer perceptron (MLP), which is a fully connected neural network architecture. The network can be trained to map spatial coordinates and viewing directions (e.g. light rays from points in an image) to color and density values. An MLP uses a series of mathematical structures that organize inputs, such as a position in 3D space or a 2D viewing direction, to determine the color and density values at each point in a 3D image.

A NeRF needs to be trained (i.e. learned) for each unique scene, using sensor data (e.g. images) from different viewpoints. Also, the sensor position and orientation need to be known, which requires tracking of the sensors. This can e.g. be done through some combination of SLAM, GPS, or inertial measurements. Or it can be done after capture from analyzing of the sensor data, e.g. with the help of a neural network.

The training process of the NeRF can generally be described as follows, in which cameras are used as way of example. For each sparse camera (and image) viewpoint provided, camera rays are traced through the scene, generating a set of 3D points with a given radiance direction (into the camera). For these points, volume density and emitted radiance are predicted using the MLP. The color along a ray can be weighted together, given the density, to give information about occlusions (i.e. object blocking the light). A rendered image can then be generated through classical volume rendering. The error between the rendered image and the original image can be minimized (e.g. through gradient decent) over multiple viewpoints, encouraging the MLP to develop a coherent model of the scene.

Another example of a learned rendering-based approach for representing a scenario is Gaussian Splatting. Like NeRFs, Gaussian splatting is also a radiance-based technique, including rasterization. More specifically, Gaussian Splatting is a volume rendering technique that deals with the direct rendering of volume data without converting the data into surface or line primitives. This technique integrates sparse points produced during camera calibration, and represents scenarios with 2D or 3D Gaussians which retain properties of continuous volumetric radiance fields. The sparse points (or point cloud) can e.g. be randomly initialized and/or obtained from a LiDAR point cloud. The Gaussians may have time-varying positions, and can thus be used to render dynamic 4D scenarios (i.e. including a time dimension).

In such case, the scenario representation may comprise a set of Gaussians. The set of learnable parameters may then correspond to position, size, rotation, and spherical harmonics of the Gaussians. The rendering can be done by projecting the 3D (or dynamic 4D) Gaussians onto an image plane. Then, for each pixel, the algorithm traverses the splatted Gaussians based on their distance to the current camera position, and accumulates their density and color.

As an alternative to rendering-based techniques, also generative models can be used for transforming sensor data. Examples of such machine learning techniques comprises Generative Adversarial Networks (GANs) and Diffusion models.

GANs are a type of machine learning framework consisting of two neural networks, a generator and a discriminator, that compete against each other in a zero-sum game. The generator creates data (e.g., images, audio, or text) resembling real-world samples, and the discriminator evaluates whether a given input is real (from the dataset) or fake (produced by the generator). Through this adversarial process, the generator can improve its ability to create realistic outputs, while the discriminator can improve its ability to distinguish between real and fake data. This dynamic leads to the generation of highly realistic synthetic data.

Diffusion models are a class of generative machine learning models used to create synthetic data, including sensor data. They work by progressively transforming random noise into structured data through an iterative process. During a training phase, the model learns to reverse a process that incrementally adds noise to real data, effectively destroying its structure. In a generation phase, the model applies the learned reverse process to generate new data that resembles the original training data from random noise.

Diffusion models are well-suited for generating synthetic sensor data because they can capture fine-grained details and complex patterns, making them useful for creating realistic representations of inputs like images, point clouds, or time-series data.

The techniques described above can all be used as part of the transformation system referred to above. This can be used together with a query system, which can be based upon the use of so-called embedding networks (may also be referred to as "encoding network", "embedding neural network", or "embedding artificial neural network").

The embedding network refers to a computational model or set of techniques that are used to enable a computer to generate an embedding for input data (e.g. sensor data, textual data, etc.), where the "embedding" is a mathematical (vector) representation of said input data. In more detail, the embedding network can be used to transform the input data into a more compact representation, in a multi-dimensional space, while preserving meaningful relationships between the input data points.

Embedding networks are for example used for tasks like natural language processing (NLP) and computer vision. These networks take raw input data, such as words in a sentence or pixels in an image, and convert them into fixed-size, numerical vectors (embeddings) that capture essential characteristics or features of the input data. In more detail, in NLP, the embedding networks convert words into numerical vectors, where words with similar meanings or contextual usage are represented closer to each other in the embedding space. Similarly, in computer vision, the embedding networks convert images to numerical vectors, enabling the network to understand visual similarities, like grouping similar objects or scenes closer together in the embedding space (multi-dimensional (vector) space).

The embedding network itself may comprise layers of neural network architecture, often employing techniques like convolutional layers, recurrent layers, fully connected layers, attention layers, or transformer layers to learn and extract meaningful patterns from the input data. The embedding network may be trained through processes like supervised learning, unsupervised learning, or self-supervised learning to optimize the embeddings for specific downstream tasks, such as classification, clustering, or recommendation.

Different data types may be embedded using different embedding networks. The different embedding networks may then be trained to generate embeddings in the same embedding space (the same multi-dimensional space) so that embeddings (generated by different embedding networks) that are contextually, spatially and/or temporally related point towards the same point within the multi-dimensional space. The term "point towards the same point within the multi-dimensional space" should in the present context be interpreted broadly, and encompass "point in substantially the same direction within the multi-dimensional space" or "point towards substantially the same point within the multi-dimensional space" and so forth. In more detail, having two embedding vectors pointing towards the same point or in the same direction, one can infer a relationship between the two underlying data samples. For example, if one has two embedding vectors, one can calculate how close they are to pointing towards the same point or how close they are to pointing in the same direction in order to determine a relationship between the underlying data samples, where the closer they are to pointing towards the same point or the same direction, the more likely it is that the underlying data samples relate to the same object or scene.

This may for example be done by training a first embedding network, to generate embeddings in a multi-dimensional space, based on input data from a first data source. Then, each of the other embedding networks can be trained "against" or in association with the first embedding network (or any of the other embedding networks one trained) so that the embeddings of the other networks that are contextually, spatially and/or temporally related with the embeddings of the first embedding network point towards the same point within the multi-dimensional space as the related embeddings of the first embedding network. For example, if the first embedding network is trained to generate image embeddings for camera images and a second embedding network is intended to generate embeddings for LiDAR data, then the second embedding network may be trained by feeding the second embedding network with lidar data of a scene where corresponding image embeddings (of that scene) will be used as basis for forming a ground-truth (desired output). By doing this process for each subsequent embedding network, one may obtain a set of embedding networks capable of ingesting outputs from various data sources and output corresponding embeddings where contextual, spatial and/or temporal relations are represented by the proximity or similarly in direction of the embeddings (vectors) in the multi-dimensional space.

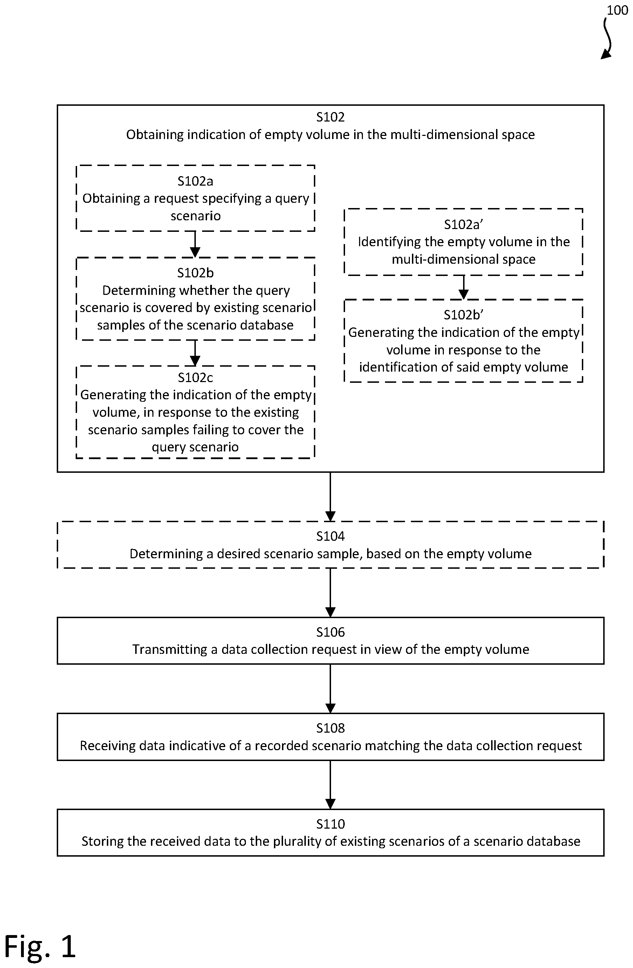

Below, reference is made to scenario embedding networks and query embedding network. These are both referring to embedding networks, as generally described above. The different names are merely to be understood as indicating the different functions of the embedding networks. The scenario embedding network(s) is configured to generate scenario embeddings for scenario samples, based on sensor data recorded in vehicles. The query embedding network is then configured to generate query embeddings for query scenarios. This will be further elaborated upon in connection with Fig. 1 below.

It is to be noted that the disclosed technology is not limited to the above examples of machine learning techniques. For example, other machine learning techniques that employs some of the above aspects may be used, as well as completely different techniques, as realized by the skilled person.

The surrounding environment of the vehicle can be understood as a general area around the vehicle in which objects (such as traffic signs, or other vehicles, landmarks, obstacles, etc.) can be detected and identified by vehicle sensors (radar, LIDAR, cameras, etc.), i.e. within a sensor range of the ego-vehicle. The sensor data may thus depict the world around the vehicle. Put differently, the surrounding environment can refer to the world around the vehicle that is relevant for its decision and control.

By the wording "synthetic", as in synthetic sensor data, is herein meant synthetic in the sense that it is machine (or computer) generated, as opposed to being recorded or otherwise collected data of the real world. It is however to be appreciated that the synthetic sensor data may be generated from "real" sensor data, e.g. by performing transformations of the real sensor data, as described in the following. In the present context, the synthetic sensor data can be seen as transformed sensor data. I.e. the original sensor data after some transformation has been made to it.

### Embodiments

Figure 1 is a schematic flowchart representation of a computer-implemented method 100 for expanding a scenario database. More specifically, it may be a method 100 for expanding a reachable volume within a scenario space of the scenario database based on existing scenario samples of the scenario database. As will be further elaborated upon below, the reachable volume may be seen as a set of scenario samples that can be covered by the available scenario samples, by use of transformation techniques of the associated sensor data.

The wording "expanding" as in "expanding a scenario database" may herein be construed as adding new scenario samples to an existing set of scenario samples. This may be done e.g. by collecting, generating, providing, or in any other way obtaining said new scenario samples. In other words, by performing the method 100 described herein, new scenario samples (i.e. scenario samples not previously present in the scenario database) can be added to the scenario database. The method 100 may thus also be seen as a method for creating, populating, or in any other way generating the scenario database. It is to be noted that the new scenario samples need not to be added to the same instance of database as the existing scenario samples of the scenario database. They may as well be added to a separate database. The separate database may then form part of the scenario database. The (expanded) scenario database may be used for scenario-based testing and/or validation of automated driving systems. The scenario database will be further explained below.

The method 100 can be performed by a general computing device, such as a server (may also be referred to as remote server, cloud server, central server, back-office server, fleet server, or back-end server). More specifically, the method 100 may be performed by a processing system of the server. The processing system may for example comprise one or more processors and one or more memories coupled to the one or more processors, wherein the one or more memories store one or more programs that perform the steps, services and functions of the method 100 disclosed herein when executed by the one or more processors.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

It should further be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination. For example, the method 100 may optionally comprise the step denoted S104. Alternatively, or in combination with step S104, the method may optionally comprise the set of steps denoted S102a, S102b and S102c and/or the set of steps denoted S102a' and S102b'. The steps denoted S102a, S102b and S102c can be seen as one set of sub-steps of the step denoted S102. Similarly, the steps denoted S102a' and S102b' can be seen as another set of sub-steps of the steps denoted S102. The two sets of sub-steps may be performed as separate alternatives, or in combination with each other. For example, the indication of the empty volume may be generated as a combined volume from two volumes generated by the respective set of sub-steps.

As described in the foregoing, the method 100 uses a scenario database. The scenario database can be seen as a collection of existing scenario samples. More specifically, the scenario database comprises a plurality of scenario samples. Each scenario sample comprising sensor data depicting a surrounding environment of a vehicle over a period of time. In other words, a scenario sample of the scenario database may comprise a sequence of sensor data. The sensor data of each scenario sample may thus be a plurality of sensor recordings (such as image frames making up a video sequence) over the period of time. The period of time may extend over at least two subsequent points-in-time. The sensor data depicting the scenario may for instance comprise two or more sensor data frames. However, the period of time may also be a single point-in-time. Thus, the sensor data associated with a scenario sample may comprise of sensor data frames for said point-in-time. It is to be noted that the sensor data associated with a scenario sample may comprise sensor data of one or more sensor data modalities. In other words, the sensor data may comprise one or more sensor data types, such as image data, LiDAR data, radar data, ultrasonic data, etc. Moreover, the sensor data may comprise sensor data captured by two or more instances of the same sensor data type, such as image data from two or more cameras.

It is to be noted that even though reference is made to "a" or "the" vehicle in connection with the scenario samples of the scenario database, the scenario samples may of course be captured by/for a number of different vehicles. The vehicle referred to in connection with a certain scenario sample thus refer to whichever vehicle has captured the corresponding sensor data, or that is otherwise linked to (e.g. depicted in) said sensor data. The sensor data may thus be captured by on-board sensors of said vehicle. Alternatively, the sensor data may be captured by off-board sensors, such as sensors of roadside infrastructure, or of other road users (such as other vehicles), that are in view of the surrounding environment of said vehicle.

The wording scenario (or driving scenario) may be understood as a certain situation, or a chain of events. The scenario may also be referred to as a scene, evolving over the period of time. Driving scenarios can range from common situations (such as following a car on a highway) to more rare edge cases (such as avoiding an obstacle while merging onto a busy road). An aim in ADS development is to ensure the ADS can handle both typical and exceptional conditions effectively.

Moreover, the scenario may be defined by a set of conditions of circumstances under which the vehicle operates during said period of time. This may encompass various factors relating to the environment, or that can affect the driving experience, the vehicle's performance, and how it operates. The driving scenario may e.g. comprise one or more of a specific route, geographical location, type of driving environment (e.g. school area, urban environment, highway segments, etc.), type of road (e.g. highways, city streets, rural roads, intersections, and roundabouts), presence and type of other road users, time of day (e.g., morning, midday, evening, nighttime, etc.), traffic levels (e.g. rush hour, low traffic density, etc.), weather conditions, road conditions, lighting levels, traffic conditions (e.g. speed, distance to other road users) etc. It is to be understood that the driving scenario may be defined by any combination of the above-mentioned examples. As a non-limiting example, the scenario may be defined as "driving on city streets, in heavy rain, with pedestrians crossing the road, and light traffic".

The wording "sample", as in "scenario sample", may then be seen as an instance of a scenario within the scenario database. More specifically, the scenario sample can be seen as an existing scenario, already recorded and present in the scenario database. Each scenario sample may be associated with a set of data, such as sensor data collected by sensors onboard the vehicle, as well as other data added to the sample, which will be further explained below. The data indicative of a recorded scenario which is stored in the scenario database (as is further explained below) can then make up a new scenario sample of the scenario database.

The wording query scenario may in turn refer to a requested or desired scenario. The query scenario may be a scenario that is not currently existing in the scenario database, but which is desirable to obtain. The query scenario may be represented by a text description describing the query scenario. For example, a sentence such as "driving on city streets, in heavy rain, with pedestrians crossing the road, and light traffic". Alternatively, or in combination the query scenario may be represented by a computer-simulated scenario. For example, the computer simulated scenario may be generated by computer graphics. It may then be desirable to obtain more realistic sensor data of said simulated scenario, which can be achieved by the synthetic sensor data generated by the proposed method 100. More specifically, the computer simulated scenario can be represented by a scenario embedding, just like "real" sensor data. The method 100 then provides means for collecting real-world sensor data of a scenario corresponding to said scenario embedding.

Each scenario sample is further associated with a scenario embedding representing the scenario sample in a multi-dimensional space. A scenario embedding associated with a scenario sample may be generated by processing sensor data of said scenario sample through a scenario embedding network that has been trained to process data from input sensor data and to output a corresponding scenario embedding in the multi-dimensional space. The wording "associated with" in the context of an embedding being associated with a scenario may thus be understood as the embedding representing the scenario in the multi-dimensional space.

The multi-dimensional space (also referred to herein as "scenario space" or "embedding space") herein refers to a mathematical space where high-dimensional data (such as sensor data) can be transformed and represented as lower-dimensional vector representations, known as embeddings. The multi-dimensional space can be structured such that the embeddings capture meaningful patterns, relationships or features from the original data, enabling efficient processing, comparison and analysis.

More specifically, in the embedding space, similar sensor data (e.g., frames of similar driving scenarios) can be mapped to points that are close together, while dissimilar data is mapped to points farther apart. This facilitates tasks such as classification, clustering, retrieval, and anomaly detection in automated driving systems. For example, the embedding space can be used to group sensor data from similar driving scenarios (e.g. by clustering) or to identify rare or challenging events for training and testing purposes (e.g. though matching algorithms).

The embedding space can further enable mapping between different data modalities. More specifically, the multi-dimensional space may be a common space for two or more data modalities. For example, different types of sensor data (e.g. image data, Lidar data, radar data, etc.), as well as textual data (e.g. a description of a scenario) can be mapped to the same embedding space. Thereby, a query embedding generated e.g. for textual data, can be used to identify e.g. image data through comparison with an embedding associated with the image data. In some examples, the multi-dimensional space is a common space for image data and textual data. Moreover, the embedding space may be formed by two or more sub-spaces. The sub-spaces may e.g. be of different dimensions, or for different data modalities. The techniques described herein may then be applied across the different sub-spaces.

Within the present context, the multi-dimensional space relates to a space spanning different possible driving scenarios, i.e. a "scenario space". Analysis of the scenario space can therefore provide information about what scenarios are covered (or not covered) by the existing scenario samples of the scenario database. Moreover, the scenario space can enable identification of specific scenarios, such as scenarios corresponding to a certain query scenario, thus aiding in retrieval of relevant data in the scenario database.

The construction of embeddings (or vector representations or encodings) of data typically involves machine learning models, such as neural networks, trained to learn representations that preserve the underlying semantics of the input data. Such networks may be referred to as embedding networks, as explained in the foregoing. A scenario embedding of a scenario sample of the scenario database may thus be generated by processing the scenario sample (or more specifically, the corresponding sensor data) through one or more scenario embedding networks. Different scenario embedding network may be used for different types of sensor data. Moreover, the sensor data of a scenario sample may comprise more than one sensor data type, such as two or more of image data, LiDAR data, radar data, etc. More generally, the sensor data of a scenario sample may comprise sensor data of a first sensor type and sensor data of a second sensor type. Each scenario embedding may be formed by aggregating a first sensor embedding generated for the sensor data of the first sensor type and a second sensor embedding generated for the sensor data of the second sensor type. In other words, separate embeddings may be generated for the different sensor data types. The scenario embedding may then be formed by aggregating (or in any other way combining) the embeddings of the different sensor data types. It is however to be noted that a single embedding network can be trained to directly generate scenario embedding for two or more sensor data types (i.e. for two or more sensor modalities).

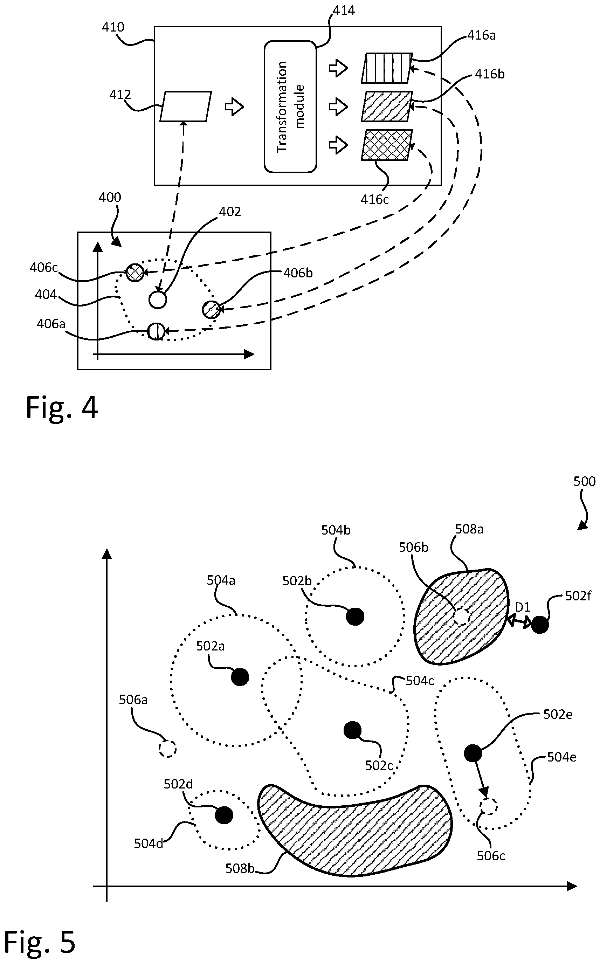

Each scenario embedding (or rather each scenario sample) of the scenario database may be further associated with a transformation volume in the multi-dimensional space. The transformation volume may be indicative of a set of possible transformed scenarios that can be generated from the corresponding scenario sample. The transformation volume of a certain scenario sample can thus be seen as a sub-space within the multi-dimensional space which covers a set of reachable transformations from said scenario sample. Put differently, the transformation volume spans a set of scenario embeddings which are associated with synthetic sensor data that can be generated from the scenario sample (through transformations as described herein). The transformation volume may further be seen as a finite volume within the multi-dimensional space, or a limit of transformation within the multi-dimensional space. What limits the transformation volume is to what extent the original sensor data can be modified while maintaining a level of realism (e.g. fulfilling some degree of dependability). Moving too far away from the original sensor data, can otherwise introduce artifacts, biases or other errors, which diminishes the utility for ADS development. The transformation volume may thus further indicate the set of possible transformed scenarios that can be generated from the scenario sample while satisfying a validity threshold, a reliability threshold and/or an accuracy threshold. As explained in the foregoing, the validity threshold may refer to what extent the synthetic sensor data reflects the characteristics of real-world sensor data. In other words, it may be a measure of how trustworthy the synthetic sensor data is for its intended purpose without introducing artifacts or inconsistencies that could lead to erroneous conclusions. The reliability threshold may be a metric for how consistently the synthetic sensor data can be generated. The accuracy threshold may be a metric of how well the synthetic sensor data matches the query scenario. In some embodiments, a dependability threshold may be used. The dependability threshold may capture two or more aspects of the validity threshold, the reliability threshold and the accuracy threshold. In other words, the dependability threshold may be a metric of the how realistic the synthetic sensor data appears, or how well it represents real-world sensor data. The transformation volume will be further explained below, in connection with Fig. 4 and Fig. 5.

It is to be noted that the scenario database can be structured in different ways depending on a specific realization. For example, the scenario database may be represented by single database comprising all of the data of the scenario database described herein. In another example, the data may be distributed over several databases, that are linked together to form the scenario database. As an example, the sensor data associated with each scenario sample may be stored in a first database. The associated scenario embeddings (optionally also associated transformation volumes) may be stored in a second database. The first and second database may then be linked through a scenario sample identifier. It is further to be noted that the scenario database may comprise additional data. For example, each scenario sample may have an associated learned rendering-based scenario representation or other means for transforming the sensor data, as will be further explained below.

The method 100 comprises obtaining S102 an indication of an empty volume in the multi-dimensional space. The empty volume is a volume not covered by the plurality of existing scenario samples of the scenario database. The empty volume may thus refer to a volume, or sub-space, within the scenario space in which there are no existing data points. In other words, the empty volume may refer to a set of scenarios not covered by (or reachable from) existing scenario samples of the scenario database. The empty volume may e.g. be defined based on a distance from existing scenario embeddings of the multi-dimensional space. More specifically, the empty volume may be determined as a volume spanning a set of data points of which the distance to the closest existing scenario embedding is above a threshold distance. Alternatively, or in combination, the empty volume may be a volume not covered by the transformation volumes of the plurality of existing scenario samples of the scenario database. Put differently, the empty volume may be identified considering the transformation volumes of the existing scenario samples. It is to be noted that both the transformation volumes, and the distances to existing scenario samples (i.e. corresponding scenario embeddings) can be considered when identifying the empty volume. For example, it may be relevant to collect data of scenarios that are in an outer region (i.e. towards a border) of a transformation volume. In other words, scenarios that have associated scenario embeddings within the transformation volume of an existing scenario, but above a certain distance from the corresponding scenario embedding. How the empty volume can be identified will be further explained below, in connection with Fig. 5.

The term "not covered", as in scenarios "not covered by the plurality of existing scenario samples" or "not covered by the transformation volumes of the plurality of existing scenario samples", may herein be understood as data points (in this case scenarios) that are either not represented, or insufficiently represented in the existing set of scenarios, and which may not be reachable by transformations of existing scenarios. These may include situations, events, or combinations of variables that fall outside the scope or range of the scenario database's existing data points. Such uncovered scenarios (or empty volume) may thus be leaving gaps in the scenario database, which may affect the ability to comprehensively train, test or validate a system using the database. As a concrete and non-limiting example, the scenario database may comprise scenario samples of high-way driving in a number of different weather conditions and traffic situations, but lacks data for night-time high-way driving under foggy conditions, such scenarios would be "not covered" by the database. As proposed herein, this may be determined in the scenario space, by analyzing the coverage of scenario embeddings associated with the existing scenario samples and/or their corresponding transformation volumes.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.

In this specific case, the step of obtaining S102 the indication of the empty volume may comprise a number of sub-steps. In the following, two different sets up sub-steps are presented. A first set of sub-steps comprises the steps denoted S102a, S102b and S102c, and can be seen as describing a case where a search for a certain query scenario in the scenario database fails, and serves as a trigger for performing the method 100. A second set of sub-steps comprises the steps denoted S102a' and S102b', and can be seen as describing a case where the scenario space is analyzed to identify "holes" or "white-spots" among the existing scenario samples. These optional steps are further elaborated upon in the following.

Turning first to the first set of sub-steps. Obtaining S102 the indication of the empty volume may comprise obtaining S102a a request specifying a query scenario. The query scenario may be associated with a query embedding representative of the query scenario in the multi-dimensional space. The step of obtaining S102 the indication of the empty space may then further comprise determining S102b whether the query scenario is covered by existing scenario samples of the scenario database. In response to the existing scenario samples failing to cover the query scenario, the step of obtaining S102 the indication of the empty space may then further comprise generating S102c the indication of an empty volume based on the query embedding. In other words, if a search for the query scenario among the existing scenario samples fails, the indication of the empty volume may be generated.

Obtaining S102a the request may comprise receiving the request, e.g. from a developer. In another example, the requested query scenario may be determined or identified as part of the method 100, based on the existing scenario samples of the scenario database. For example, the query scenario may be determined by the computing device (e.g. the server) performing the method 100. The query scenario may e.g. be determined as part of searching for data for development purposes. For example, the query scenario may be a scenario which is desirable to train, test or validate the ADS (or any function thereof) on. It is further to be noted that the query embedding may be received as part of the obtained request. Alternatively, the method 100 may comprise determining the query embedding, based on the obtained query scenario.

The query embedding may be generated by processing the query scenario through a query embedding network. The query embedding network having been trained to process data from input query scenarios and to output a corresponding query embedding in the multi-dimensional space. The query scenario may e.g. be represented by a text description of the query scenario, or a computer-simulated scenario. As explained in the foregoing, the query embedding network and the scenario embedding network may be trained in association with each other, such that a query embedding generated by the query embedding network and a scenario embedding generated by the scenario embedding network point towards the same point within the multi-dimensional space when the query embedding and the scenario embedding are contextually, spatially and/or temporally related. In other words, they can be trained so as to relate to the same multi-dimensional space.

Determining S102b whether the query scenario is covered by the existing scenario samples may be done by comparing a location of the query embedding in the multi-dimensional space, with locations of scenario embeddings of the existing scenario samples, and/or their corresponding transformation volumes. For example, vector-based similarity metrics such as Euclidian distance and cosine similarity may be used to determine the similarity or distance between the query embedding and the existing scenario embeddings.

The empty volume may be determined as a volume covering the query scenario. The indication that this empty volume exist can then be generated. The information that there exist a query embedding which is not covered by the existing scenario samples of the scenario database may constitute the indication that there exists an empty volume in the scenario database. The empty volume can then be represented or defined in different ways. For example, the empty volume may be represented by the query scenario or query embedding alone. Alternatively, or in combination, further analysis may be done to expand a volume around the query scenario, for representing the empty volume around it.

In some embodiments, the query scenario may be represented by a query volume within the multi-dimensional space. The query volume may thus be a volume in the multi-dimensional space like the transformation volume or empty volume as described in the foregoing. The query volume may span a set of query embeddings. As an example of the use of a query volume, a scenario such as "a scenario with lighting" is broad enough to cover several situations, and may thus advantageously be queried as a volume in the multi-dimensional space. The data collection request may then comprise the query volume. A recorded scenario may then match the data collection request if the corresponding scenario embedding is located within the query volume.

Turning now to the second set of sub-steps. Obtaining S102 the indication of the empty volume may comprise identifying S102a' the empty volume as a volume in the multi-dimensional space not covered by an aggregated transformation volume formed by the transformation volumes of the existing scenario samples. In other words, the empty volume may be determined as a space between the transformation volumes of the existing scenario samples. The aggregated transformation volume may be understood as the combined volume covered by the transformation volumes of the existing scenario samples. The aggregated transformation volume may also be seen as the reachable volume in the multi-dimensional space. The reachable volume meaning the volume of scenario embeddings that can be reached through transformations of the sensor data of the corresponding existing scenario samples. The empty volume may thus be seen as a "hole" in the reachable volume. Obtaining S102 the indication of the empty volume may further comprise generating S102b' the indication of the empty volume in response to the identification of said empty volume.

The indication of the empty volume may act as a trigger for performing the method 100. More specifically, the indication of the empty volume can serve as an indication of there being areas in the scenario database that is not covered by existing scenario samples. This may then provide for a data collection task to be generated.

The method 100 further comprises transmitting S106 a data collection request in view of the empty volume to one or more vehicles of a fleet of vehicles. The empty volume can be seen as defining a boundary of the data request. Put differently, the data collection request may be for any scenarios within the boundary of the empty volume.

The wording "in view of" as in transmitting the data collection request in view of the empty volume, may herein be construed as the data collection request *"being defined by [...]", "generated based on [...]",* or otherwise *"indicative of [...]"* the empty volume. The data collection request may for instance comprise the empty volume itself, or any other information describing what data is not covered by the existing scenario samples. The empty volume may e.g. be represented by a border, within the multi-dimensional space, which encloses the empty volume.

In some embodiments, the data collection request may comprise the query scenario and/or the associated query embedding, as mentioned above. In some embodiments, the data collection request may comprise a set of query embeddings located within the empty volume in the multi-dimensional space. The set of query embeddings may be represented by a query volume, as described above.

The method 100 further comprises receiving S108, from a vehicle of the fleet of vehicles, data indicative of a recorded scenario matching the data collection request. In other words, the data indicative of the recorded scenario may be received S108 in response to the transmitted data collection request.

Receiving the data indicative of the recorded scenario from the vehicle may encompass either receiving it directly from the vehicle having collected the data, or from any intermediate storage or device. For example, the vehicle may have transmitted the data indicative of the recorded scenario to a data aggregation device or a temporary storage. Upon determining that the recorded scenario matches the data collection request, the data indicative of the recorded scenario may be forwarded to the computing device performing the present method 100.

The vehicle refers in this context to the vehicle which has recorded or collected the data indicative of the recorded scenario, e.g. by onboard sensors of the vehicle.

The data indicative of the recorded scenario may e.g. be raw sensor data depicting the surrounding environment of the vehicle at the moment of the experienced scenario. Alternatively, or in combination, the data indicative of the recorded scenario may comprise some alternative representation of the raw sensor data, such as compressed sensor data, a learned rendering-based scenario representation, or a scenario embedding generated based on the sensor data.

The wording "matching" as in the recorded scenario matching the data collection request, may generally be understood as an indication that the recorded scenario to some extent fulfills the data collection request. It may e.g. be that the recorded scenario belongs to the empty volume (i.e. being located within the empty volume in the multi-dimensional space), or having a transformation volume at least partly covering the empty volume. This will be elaborated upon in the following, and further illustrated in connection with Fig. 5 below.

The recorded scenario can match the data collection request if the recorded scenario has an associated scenario embedding located within the empty volume. In other words, it may be determined that the scenario embedding associated with the recorded scenario is located within the borders of the empty volume, in the multi-dimensional space.

The recorded scenario can match the data collection request if the recorded scenario has an associated transformation volume in the multi-dimensional space that at least partly covers the empty volume. The associated transformation volume may be indicative of a set of possible transformed scenarios that can be generated from the recorded scenario. In other words, a recorded scenario that is found to be transformable into a scenario which falls within the empty volume may be determined as matching the data collection request.

In case of the data collection request comprising one or more query embeddings, the recorded scenario may match the data collection request if a scenario embedding associated with the recorded scenario is within a defined distance from one or more of the query embeddings. In other words, the matching may be based on an embedding matching, e.g. though calculation of a Euclidian distance, or a cosine similarity.

In some embodiments, the method 100 further comprises determining S104, based on the empty volume, a desired scenario sample. The desired scenario sample may be a scenario sample located within the empty volume in the multi-dimensional space. Alternatively, or in combination, the desired scenario sample may have a corresponding transformation volume at least partly overlapping the empty volume. The data collection request may then comprise a scenario embedding associated with the desired scenario sample. The desired scenario may thus be seen as a query scenario. Said scenario embedding may thus be seen as a query embedding. A difference may be that the desired scenario can be determined based on the empty volume, whereas the query scenario can be determined independently of the current coverage of the scenario space. The recorded scenario may have an associated scenario embedding within a defined distance from the scenario embedding associated with the desired scenario sample. In other words, the recorded scenario may match the data collection request if the scenario embedding associated with the recorded scenario is within the defined distance from the scenario embedding associated with the desired scenario sample.

The data collection request may further comprise a priority level. The priority level may be seen as an indication of how important the data collection request is (or any desired scenario associated therewith), or how relevant the recorded scenario is. The importance may e.g. be related to how important/relevant it is for the development of the ADS. The priority level may e.g. be set based on a size of the empty volume and/or a distance to a closest existing scenario sample in the multi-dimensional space. Thus, the priority level may depend on how far the requested data is from existing scenarios.

The data indicative of the recorded scenario may be of a first resolution upon the priority level being above a first threshold, and a second resolution upon the priority level being below the first threshold. The first resolution being greater than the second resolution. In other words, what type of data is received in response to transmitting the data collection request may differ, depending on the priority level. More specifically, the data indicative of the recorded scenario may be received at different resolutions, depending on the priority level. Resolution may generally be understood as a level of detail of the data. In essence, higher resolution typically provides more detail, but may require greater storage, processing power, or bandwidth. The resolution may for example refer to a pixel density of image data. Alternatively, or in combination, the resolution may refer to a sample frequency of a sensor data sequence. The different resolutions may thus refer to data at different compression levels. In other words, the data indicative of the recorded scenario may be raw sensor data, or compressed sensor data. The data indicative of the recorded scenario may be of different resolutions in the sense that it is represented by different forms of data representations. The data may e.g. be represented as a learned rendering-based scene representation (such as a NeRF), enabled to reconstruct or re-render the original sensor data. As a further example, the data may be represented simply by a scenario embedding associated with the recorded scenario. A decoding network may then be used to reconstruct the original sensor data encoded into the scenario embedding.

The data indicative of the recorded scenario may be of a third resolution upon the priority level being below the first threshold and above a second threshold. The third resolution being between the first resolution and the second resolution. In an example, the first resolution may correspond to raw sensor data. The second resolution may correspond to a scenario embedding associated with the original data. The third resolution may correspond to a learned rendering-based scenario representation. Moreover, a priority level above the first threshold may be understood as a high priority. A priority level below the first threshold, but above the second threshold may be understood as medium priority. A priority level below the second threshold may be understood as a low priority.

The priority level may be defined in the data collection request. In other words, the data collection request may be associated with a priority level. Then, if a recorded scenario matching the data collection request is found, it may be transmitted to the computing device performing the method 100 according to the priority level as described above.

As another example, the priority level of the recorded scenario may be evaluated in the vehicle. Put differently, it may be determined in the vehicle having recorded the scenario what priority level the recorded scenario fulfills. This may be determined e.g. by comparing the recorded scenario (or its associated scenario embedding) with the data collection request (or more specifically, with the empty volume or a query embedding of the data collection request. For example, if it is found that the recorded scenario is relatively far away from the query scenario or towards a border of the empty volume, it may be transmitted at a lower resolution. If instead the recorded scenario is found to be relatively close to the query scenario or towards a center of the empty volume, it may be transmitted at a higher resolution. Thereby, recorded scenarios that may be far from existing scenario samples of the scenario database, and thus may complement the scenario database well, can be transmitted at higher resolutions.

Considering the priority level of the data collection request provides for more efficiently managing and transmitting vast amounts of sensor data generated by a fleet of vehicles. This can be achieved partly by the balancing between data richness and bandwidth limitations. This can further be seen as a dynamic, scenario-value-based hierarchical data collection system.

The method 100 further comprises storing S110 the received data indicative of the recorded scenario to the plurality of existing scenario samples of the scenario database. The data indicative of the recorded scenario may be stored S110 for subsequent use in development of an automated driving system. The method 100 may further comprise training, testing or validating the ADS (or any feature thereof) on the data indicative of the recorded scenario.

The possibility of expanding the scenario database enables also an expansion of the reachable volume within the embedding space, as it gives a larger coverage of transformed scenarios that can be generated from the existing scenario samples. In particular, after having been collected, the recorded scenario may be used to generate synthetic sensor data within a transformation volume of the recorded scenario. The recorded scenario (or rather the sensor data thereof) may for instance be transformed into (i.e. generating synthetic sensor data of) a scenario having an associated scenario embedding within a threshold distance from the query embedding or the desired scenario sample, within the multi-dimensional space. The threshold distance may provide for an error margin, assuring that the synthetic sensor data is "sufficiently" similar to the query scenario, although it does not have to be exact. In other words, the synthetic sensor data may be generated so at to correspond to the query (or desired) scenario, based on a similarity to the query embedding within the multi-dimensional space. The threshold distance may be compared to a Euclidian distance between the query embedding and the scenario embedding of the synthetic sensor data. In another example, the threshold distance may be compared to a cosine similarity between the query embedding and the scenario embedding of the synthetic sensor data. It is however to be noted, that other similarity metrics may be used as well.

Moreover, the synthetic sensor data may be generated such that the associated scenario embedding is within the transformation volume of the recorded scenario. This may ensure that the synthetic sensor data fulfills any requirement of realism.

The synthetic sensor data may comprise one or more sensor data frames. For example, the synthetic sensor data may comprise a number of subsequent sensor data frames (such as image frames, LiDAR point clouds, radar data etc.). The synthetic sensor data may thus in some cases be a video stream over two or more time instances. In another example, the synthetic sensor data may be a sensor data frame of a single point-in-time. Moreover, the synthetic sensor data may comprise sensor data of one or more sensor modalities (i.e. of one or more sensor data types).

For completeness, the process of transforming a scenario sample into a desired scenario sample (such as a query scenario) will in the following be described. In broad terms, the transformation process can be built upon generating synthetic sensor data that matches a scenario embedding of the desired scenario sample, referred to below as query embedding.

Transforming the sensor data of a scenario sample to synthetic sensor data may be performed by (i) applying transformation to the sensor data, thereby generating updated sensor data; (ii) determining a location of an embedding representing the updated sensor data within the multi-dimensional space; repeating steps (i) and (ii) until the position of the updated sensor data is within the threshold distance of a query embedding, and providing the updated sensor data as the synthetic sensor data. In other words, the synthetic sensor data may be generated through an iterative process of transforming the (original) sensor data until it corresponds (at least within the threshold distance) to the query embedding. The transformations may include changing of view-points, adding/removal of objects in the depicted surrounding environment, changing of object properties (e.g. modifying colors, textures, or materials) changing of weather, changing of lighting conditions, changing of road layout, changing of object trajectories, changing of sensor characteristics, changing of available sensors, traversals of previously unseen areas, etc. The above described iterative transformation process may be combined with different machine learning techniques.

In some examples, generative machine learning techniques may be used. In other words, the transformed scenarios may be generated by a generative machine learning model. For example, transforming the sensor data of a scenario sample to synthetic sensor data may comprise feeding the sensor data to a Generative Adversarial Network or a Diffusion model, trained to output synthetic sensor data. The GAN and/or Diffusion model may further be trained to take the query embedding as input. In another example, the GAN and/or Diffusion model may be trained to take the query scenario as input. The outputted synthetic sensor data may be seen as transformed sensor data.

Alternatively, or in combination, rendering based techniques may be used. In other words, the transformed scenarios may be generated by a rendering-based machine learning model. For example, each scenario sample in the database may be further associated with a learned rendering-based scenario representation configured for subsequent rendering of synthetic sensor data associated with said scenario sample. The scenario representation may thus be learned from the sensor data of the scenario samples. Transforming the sensor data of a scenario sample to synthetic sensor data may comprise rendering the synthetic sensor data using the learned rendering-based scenario representation. The process of rendering the synthetic sensor data may thus be rendering a transformed scenario, different from the scenario from which the scene representation was learned. This can e.g. be done by modifying parameters of the scenario representation.

The scenario representation may be understood as a set of learnable parameters which together describes different physical properties of the scene, such as the geometry, objects, colours, lighting, etc. Put differently, the scenario representation can be physically based in such way that it understands and models the underlying physical processes that occurs in the real-world, and how the sensors reflect these in the sensor data (considering e.g. projections, refractions, lenses etc.). This can e.g. be based on characteristics of materials, and modelling how light travels in the environment. Thereby, the scenario representation can learn to model geometric aspects, such as positioning, orientation, and scale of 3D models. It can further model lighting aspects, such as colours, shadows, brightness, and reflections. It can further model transparency and translucency, describing how light passes through different materials like glass or fog. The learned rendering-based scenario representation may be a Neural Radiance Field. In another example, the learned rendering-based scenario representation may be a Gaussian splatting-based model.

It is further to be noted that combination of the above described techniques is possible as well. As an example, a learned rendering-based scenario representation, such as NeRF, can be trained. Then a diffusion model can be used to perform direct edits on the NeRF representation.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

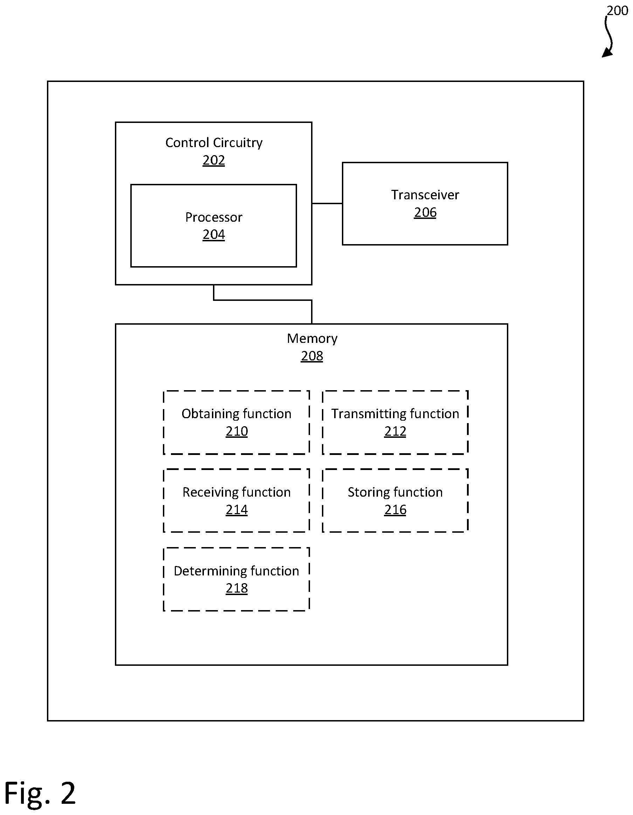

Figure 2 is a schematic illustration of a computing device 200, in accordance with some embodiments of the disclosed technology. The computing device 200 may be configured to perform the method 100 as described in connection with Fig. 1. Thus, the computing device 200 is configured to expand a scenario database as described in the foregoing.

The computing device 200 as described herein, refers to a computer system, or any device or general computing system configured to perform various functions. The computing device 200 may for instance refer to a server or the like. Even though the computing device 200 is herein illustrated as one device, the computing device 200 may be a distributed computing system, formed by a number of different devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as other devices. The transceiver 206 may both transmit data from and receive data to the computing device 200. The computing device 200 may e.g. be part of a vehicle. The transceiver 206 may then enable the computing device 200 to communicate with other systems of the vehicle, or with external entities, such as other vehicles, or a remote server.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present. The memory 208 may further store the scenario database, as described above in connection with Fig. 1. Alternatively, the scenario database may be provided externally to the computing device 200. The computing device 200 may then be communicatively connected to the scenario database.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain an indication of an empty volume in the multi-dimensional space. The empty volume being a volume not covered by the plurality of existing scenario samples of the scenario database. This may be performed e.g. by execution of an obtaining function 210.

The control circuitry 202 is further configured to transmit a data collection request in view of the empty volume to one or more vehicles of a fleet of vehicles. This may be performed e.g. by execution of a transmitting function 212.

The control circuitry 202 is further configured to receive, from a vehicle of the fleet of vehicles, data indicative of a recorded scenario matching the data collection request. This may be performed e.g. by execution of a receiving function 214.

The control circuitry 202 may be further configured to store the received data indicative of the recorded scenario to the plurality of existing scenario samples of the scenario database. This may be performed e.g. by execution of a storing function 216.

The control circuitry 202 may be further configured to determine, based on the empty volume, a desired scenario sample. This may be performed e.g. by execution of a determining function 218. The data collection request may then comprise a scenario embedding associated with the desired scenario sample. The recorded scenario may have an associated scenario embedding within a defined distance from the scenario embedding associated with the desired scenario sample.

It should be noted that the principles, features, aspects, and advantages of the method 100 as described above in connection with Fig. 1, are applicable also to the computing device 200 as described herein. In order to avoid undue repetition, reference is made to the above. Hence, the control circuitry may be configured to perform any of the steps as described as part of the method 100.

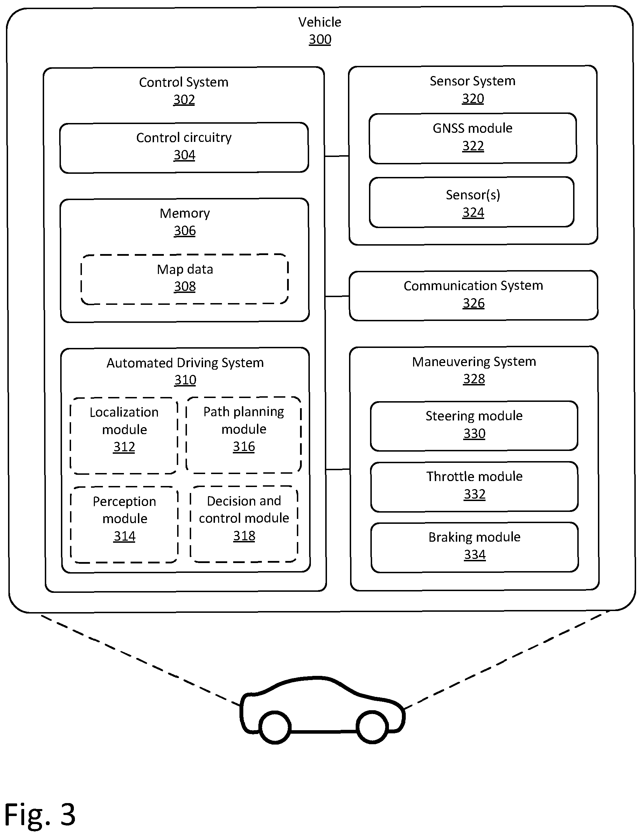

According to some aspects of the disclosed technology, as system for expanding a scenario database may be provided. The system may be configured to perform the techniques described herein, e.g. in connection with Fig. 1. The system may comprise the computing device 200 described above. The computing device 200 may server as a server within the system. The system may further comprise one or more vehicles. In other words, the system may comprise a fleet of vehicles. The one or more vehicles of the system may be configured to collect or record sensor data as they are navigating the roads. The one or more vehicles may thus comprise one or more onboard sensors, such as one or more cameras, LiDAR sensor, radar sensor, etc. The vehicle(s) may thus be used for data collection tasks. The vehicle(s) may thus correspond to the one or more vehicles to which the data collection request is transmitted, as mentioned above. The one or more vehicles may further be configured to perform some techniques as described above in connection with Fig. 1. The one or more vehicles may for instance be configured to receive the data collection request. The one or more vehicles may be further configured to generate a scenario embedding associated with a recorded scenario (i.e. a scenario experienced by the vehicle). The one or more vehicles may be further configured to determine whether the recorded scenario matches the data collection request. If so, the one or more vehicles may be further configured to transmit the data indicative of the recorded scenario to the computing device 200. A more detailed example of such a vehicle is given in the following, in connection with Fig. 3.

Figure 3 is a schematic illustration of a vehicle 300 in accordance with some embodiments. The vehicle 300 may be equipped with an Automated Driving System (ADS) 310. As used herein, a "vehicle" is any form of motorized transport. For example, the vehicle 300 may be any road vehicle such as a car (as illustrated herein), a motorcycle, a (cargo) truck, a bus, a smart bicycle, etc. The vehicle 300 should within the present context be understood as a vehicle that can be deployed with an ADS, trained using a scenario database as described herein. The vehicle 300 may further be a vehicle that can be used for collecting sensor data of different driving scenarios experienced by the vehicle. Thus, the data collection request may be transmitted from the computing device 200 to the vehicle 300.

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

The vehicle 300 comprises a number of elements which can be commonly found in autonomous or semi-autonomous vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in several different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 may comprise high-definition (HD) map data and/or standard-definition (SD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an exemplary embodiment, any distributed or local control circuitry device may be utilized in the realization of the disclosed technology.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 300.

The vehicle 300 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output (such as sensor data recorded for a driving scenario) to a remote location (e.g. remote server, operator or control center) by means of the one or more antennas. Moreover, the communication system 326 may be further configured to enable the various elements of the vehicle 300 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As stated above, the vehicle 300 comprises an ADS 310. The ADS 310 may be part of the control system 302 of the vehicle. The ADS 310 is configured to carry out the functions and operations of the autonomous functions of the vehicle 300. The ADS 310 can comprise a number of modules, where each module is tasked with different functions of the ADS 310.

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensor data from the sensor system 320. The localization module 312 and/or the perception module 314 may further transmit control instructions to the sensor system 320.

The ADS may further comprise a path planning module 316. The path planning module 316 is configured to determine a planned path of the vehicle 300 based on a perception and location of the vehicle as determined by the perception module 314 and the localization module 312 respectively. A planned path determined by the path planning module 316 may be sent to the maneuvering system 328 for execution. As an example, the determined current position of the vehicle on the navigation map may be transmitted to the path planning module 316.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not. The decision and control module 318 may be further configured to detect any deviating behavior of the vehicle, such as deviations from the planned path, or expected trajectory of the path planning module 316. This includes both evasive maneuvers performed by the ADS 310 and by a driver of the vehicle.

It should be understood that parts of the described solution may be implemented either in the vehicle 300, in a system located external to the vehicle, or in a combination of internal and external to the vehicle; for instance, in a server in communication with the vehicle, a so-called cloud solution. The different features and principles of the embodiments may be combined in other combinations than those described. Further, the elements of the vehicle 300 (i.e. the systems and modules) may be implemented in different combinations than those described herein.

Figure 4 illustrates, by way of example, a mapping between scenario samples and a multi-dimensional space 400. Fig. 4 is intended for improved understanding of the aspects of the herein disclosed technology, and shall not be seen as limiting of the scope. More specifically, Fig. 4 shows the effect of a transformation of (original) sensor data 412, in the embedding space 400. Specifically, the transformations can be mapped to the embedding space, meaning it can be viewed and analyzed in the embedding space.

In the upper part of Fig. 4, a transformation system 410 is shown. The transformation system 410 comprises a transformation module 414. The transformation module 414 herein represents a block for performing the techniques relating to the transformation of (original) sensor data 412 to generate synthetic sensor data 416a, 416b, 416c. The transformation module 414 may thus implement technologies described above, such as the generative or rendering-based machine learning techniques.

In the lower part of Fig. 4, an illustration of a multi-dimensional space 400 is shown. For practical reasons, the multi-dimensional space 400 is herein illustrated as a two-dimensional space, spanned by two axes. It is however to be noted that the multi-dimensional space 400 may be of any dimension. More specifically, the multi-dimensional space 400 may be formed by two or more dimensions.

Moreover, as shown herein, the transformation volume 404 may be a closed set. In other words, the transformation volume 404 may be formed by a single closed volume in the multi-dimensional space. It should however be noted that even though the transformation volume 404 is herein depicted as a closed set, it may also be formed by a number of separate sub-sets. Put differently, the transformation volume 404 associated with a scenario sample may be formed by a number of sub-volumes, separated in the multi-dimensional space. In other words, the transformation volume may be a disjoint volume. This may be the case e.g. if (at least some of) the possible transformations occur in discrete steps, rather than continuous.

As explained in the foregoing, a scenario sample (or the sensor data thereof) can be encoded into a scenario embedding within the multi-dimensional space 400. In Fig. 4, a dashed double-headed arrow indicates how the sensor data 412 can be mapped to an associated scenario embedding 402 in the multi-dimensional space 400.

As the sensor data 412 is transformed into synthetic sensor data, herein represented by three differently transformed scenarios indicated by 416a-c, a scenario embedding associated with each transformed data shift to another point in the multi-dimensional space 400. More specifically, the first synthetic sensor data 416a maps to a first shifted scenario embedding 406a in the multi-dimensional space. Similarly, the second synthetic sensor data 416b maps to a second shifted scenario embedding 406b. Lastly, the third synthetic sensor data 416c maps to a third shifted scenario embedding 406c.

Applying multiple such transformations (still with reasonable "amplitude" of these transformations to keep the results valid/reliable/accurate, as explained in the following) renders a transformation volume in the multi-dimensional space. The transformation volume 404 can be seen as a sub-space, within the multi-dimensional space, which is spanned by the scenario embeddings that can be reached through transformation of the scenario sample formed by the sensor data 412 and the associated scenario embedding 402.

The transformation volume (may also be referred to as perturbation space) may be determined for each scenario sample in the scenario database. More specifically, a size and/or shape of the transformation volume for a one scenario sample may differ from a size and/or shape of the transformation volume of another scenario sample. In other words, the transformation volume may be determined individually for each scenario sample. The transformation can be determined by performing a number of transformations of the corresponding sensor data, to determine to what extend said sensor data can be transformed with sufficient dependability. This may then result in an asymmetrical transformation volume, as shown herein. In the illustrated examples, the synthetic sensor data 416a-c can be seen as laying on the border of what can be validly, reliably and/or accurately achieved from transformations of the original sensor data 412. The border of the transformation volume 404 can then be determined based on the locations of the corresponding scenario embeddings 406a-c in the multi-dimensional space. As described above, the transformation volume 404 can be determined through an iterative approach. The iterative approach may comprise applying a multitude of transformations at different amplitudes, to see what the corresponding shift in the embedding space 400 is, and what volume this results in. The wording "amplitude" of transformation, may be understood as a degree or amount of transformation carried out, or a general metric of how much the original sensor data is modified.

In another example, the transformation module may be rule-based. In other words, the transformation module may be determined for each scenario sample based on pre-defined rules. As a non-limiting example, the transformation volume may be defined as a circle (in a 2D embedding space), or a sphere (in a 3D embedding space) with a given radii, and centered around the scenario sample. This is an example where the transformation volume is symmetric.

The disclosed technology then, at least partly, builds upon that synthetic sensor data corresponding to scenario embeddings within this transformation volume can be generated, using the transformation system 410. By applying this knowledge either to recorded scenarios not currently in the scenario database, or to the existing scenario samples of the scenario database, a more effective data collection approach can be achieved.

Figure 5 illustrates, by way of example, a plurality of scenario samples of a scenario database, in a multi-dimensional space 500. More specifically, the black circles represent locations of scenario embeddings 502a, 502b, 502c, 502d, 502e, 502f associated with the plurality of scenario samples of the scenario database. For the purpose of scenario-based development, it may be desirable to have as broad coverage over the space of possible scenarios as possible. Fig. 5 is to illustrate the process of understanding which areas in the scenario space are covered by the existing scenario samples, which areas are not covered, and how these areas could be filled. To understand which new scenarios should be collected and used to expand the scenario database, it is relevant to understand what is currently the reachable volume within the scenario space 500 (i.e. which parts in the scenario space that can be reached from existing scenario samples), and what coverage the new recorded scenarios provide.

In Fig. 5, a first through sixth scenario embedding 502a-f, associated with respective first through sixth scenario samples, are shown. The scenario embeddings may further be shown with an associated transformation volume. More specifically, each of the first through fifth scenario embedding 502a-e is shown with a respective first through fifth transformation volume 504a-e. As shown herein, the transformation volumes 504a-e may have different shapes and/or sizes. Additionally, the transformation volumes may be symmetrical (as shown by the first transformation volume 504a and the second transformation volume 504b). However, the transformation volumes may also be asymmetrical (as shown by the third transformation volume 504c, the fourth transformation volume 504d and the fifth transformation volume 504e). It is further to be noted that the scenario embeddings may also be without an associated transformation volume, such as for the sixth scenario embedding 502f, as shown herein.

As explain in the foregoing, empty volumes in the scenario space 500 can be identified in view of the existing scenario samples (and optionally also their respective transformation volume. Considering the case in Fig. 5, a first empty volume 508a and a second empty volume 508b can be identified. In the illustrated example, the first and second empty volume 508a, 508b are identified as areas which are not covered by any of the transformation volumes, and/or are at least a defined distance D1 from any existing scenario embedding. It is to be noted that the relative shapes and sizes of the transformation volumes and the first and second empty volume 508a, 508b are merely to be seen as examples. Further, the empty volumes may in some cases partly overlap with one or more transformation volumes. Even further, the empty volumes may be defined up to a border of one or more neighboring transformation volumes.

Further shown in Fig. 5 is a number of query/scenario embeddings 506a, 506b, 506c associated with a respective query scenario (or a desired scenario sample) as described in the foregoing. As an example, the first query embedding 506a may correspond to a query scenario either requested by a developer or determined in any other way. By analyzing the location of the first query embedding 506a in view of the existing scenario samples, it may be found that it is not covered by the existing scenario samples. For example, it may be found that the first query embedding 506a is located outside any transformation volume, or above a certain distance from an existing scenario embedding, such that it cannot be obtained through transformations of any existing scenario sample. The data collection request may then be generated based on the first query embedding 506a.

Looking at the second query embedding 506b, it may correspond to a desired scenario sample determined based on the first empty volume 508a identified in the scenario space 500. The second query embedding 506b may thus be generated as a scenario embedding 506b located within the first empty volume 508a. The data collection request may then be generated based on the second query embedding 506b as an alternative, or combination with the first empty volume 508a.

Lastly, the third query embedding 506c may correspond to another query scenario. However, by comparing the third query embedding 506c to the fifth transformation volume 504e it may be found that the third query embedding 506c is located within said transformation volume 504e. Thus, corresponding fifth existing scenario sample may be transformed into said the query scenario corresponding to the third query embedding 506c. This transformation is herein illustrated by an arrow representing the shift of the fifth scenario embedding 502e into a location of the third query embedding 506c in the multi-dimensional space 500.

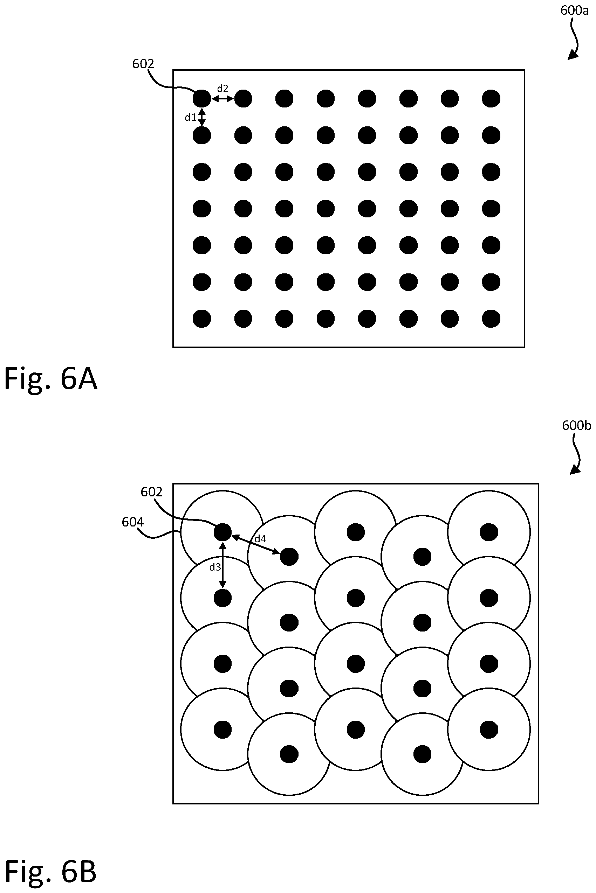

Figure 6A and 6B illustrates, by way of example, how a scenario space can be filled. More specifically, a comparison between Fig. 6A and 6B highlights an effect of the disclosed technology. Namely, that the scenario space can be exhausted using fewer scenario samples, and by the use of a targeted data collection approach which considers the current coverage of the scenario space.

Fig. 6A shows a first scenario space 600a, which is populated with a set of scenario samples, with associated scenario embeddings 602. More specifically, Fig. 6A shows a case where the disclosed technology is not utilized. In this case, to exhaust the first scenario space 600a (i.e. to achieve coverage of all possible scenarios), some kind of grid sampling technique needs to be employed. The sensor data associated with each scenario embedding (corresponding to grid points with a certain distance (d1, d2) between neighboring points) would need to be both experienced, collected, and transmitted by the fleet of vehicles, and finally stored in the scenario database. Given that the distance between neighboring points has to be relatively small, this means that a lot of scenarios need to be collected. As explained in the foregoing, this is not feasible, given the vast amounts of possible scenarios, considering also the rareness of some scenarios.

Fig. 6B shows a second scenario space 600b, which leverages techniques of the disclosed technology. More specifically, it leverages the transformation volumes 604 associated with each scenario embedding 602 of the scenario samples in the scenario database. Using the transformation system, the same scenario space can be exhausted with fewer data samples. This is due to the fact that the distance between neighboring scenario samples (d3, d4) can be greater than the distances (d1, d2) in the example of Fig. 6A. Put differently, the scenario space can be populated with a sparser collection of scenario samples. A grid sampling approach can still be applied, but since sensor data between the grid points can be generated, the grid can be made sparser. It should however be noted that a grid sampling approach need not to be performed. For example, since the transformation volumes may be non-symmetric, the scenario database may be populated by scenario samples in any possible distribution across the scenario space.

The disclosed technology has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for expanding a scenario database, wherein the scenario database comprises a plurality of existing scenario samples, each scenario sample comprising sensor data depicting a surrounding environment of a vehicle over a period of time, wherein each scenario sample is associated with a scenario embedding representing the scenario sample in a multi-dimensional space, the method comprising:
obtaining (S102) an indication of an empty volume in the multi-dimensional space, wherein the empty volume is a volume not covered by the plurality of existing scenario samples of the scenario database;
transmitting (S106) a data collection request in view of the empty volume to one or more vehicles of a fleet of vehicles;
receiving (S108), from a vehicle of the fleet of vehicles, data indicative of a recorded scenario matching the data collection request; and
storing (S110) the received data indicative of the recorded scenario to the plurality of existing scenario samples of the scenario database.

2. The method (100) according to claim 1, wherein each scenario embedding of the scenario database is associated with a transformation volume in the multi-dimensional space, wherein the transformation volume is indicative of a set of possible transformed scenarios that can be generated from said scenario sample, and
wherein the empty volume is a volume not covered by the transformation volumes of the plurality of existing scenario samples of the scenario database.

3. The method (100) according to claim 1 or 2, wherein the recorded scenario matches the data collection request if the recorded scenario has an associated scenario embedding located within the empty volume.

4. The method (100) according to any one of the claims 1 to 3, wherein the recorded scenario matches the data collection request if the recorded scenario has an associated transformation volume in the multi-dimensional space that at least partly covers the empty volume,
wherein the associated transformation volume is indicative of a set of possible transformed scenarios that can be generated from the recorded scenario.

5. The method (100) according to any one of the claims 1 to 4, further comprising determining (S104), based on the empty volume, a desired scenario sample;
wherein the data collection request comprises a scenario embedding associated with the desired scenario sample; and
wherein the recorded scenario has an associated scenario embedding within a defined distance from the scenario embedding associated with the desired scenario sample.

6. The method (100) according to any one of the claims 1 to 5, wherein obtaining (S102) the indication of an empty volume comprises:
obtaining (S102a) a request specifying a query scenario, wherein the query scenario is associated with a query embedding representative of the query scenario in the multi-dimensional space;
determining (S102b) whether the query scenario is covered by existing scenario samples of the scenario database;
in response to the existing scenario samples failing to cover the query scenario, generating (S102c) the indication of an empty volume based on the query embedding.

7. The method (100) according to any one of the claims 1 to 5, wherein obtaining (S102) the indication of an empty volume comprises:
identifying (S102a') the empty volume as a volume in the multi-dimensional space not covered by an aggregated transformation volume formed by the transformation volumes of the existing scenario samples; and
generating (S102b') the indication of the empty volume in response to the identification of said empty volume.

8. The method (100) according to any one of the claims 1 to 7, wherein the data collection request further comprises a priority level, and
wherein the data indicative of the recorded scenario is of a first resolution upon the priority level being above a first threshold, and a second resolution upon the priority level being below the first threshold,
wherein the first resolution is greater than the second resolution.

9. The method (100) according to claim 8, wherein the data indicative of the recorded scenario is of a third resolution upon the priority level being below the first threshold and above a second threshold,
wherein the third resolution is between the first resolution and the second resolution.

10. The method (100) according to claim 8 or 9, wherein the priority level is set based on a size of the empty volume and/or a distance to a closest existing scenario sample in the multi-dimensional space.

11. The method (100) according to any one of the claims 1 to 10, wherein the transformation volume further indicates the set of possible transformed scenarios that can be generated from the scenario sample while satisfying a validity threshold, a reliability threshold and/or an accuracy threshold.

12. The method (100) according to any one of the claims 1 to 11, wherein the transformed scenarios are generated by a generative machine learning model or a rendering-based machine learning model.

13. The method (100) according to any one of the claims 1 to 12, wherein the multi-dimensional space is a common space for two or more data modalities.

14. A computer program product comprising instructions, which when the program is executed by a computing device, causes the computing device to carry out the method (100) according to any one of the claims 1 to 13.

15. A computing device (200) for expanding a scenario database, wherein the scenario database comprises a plurality of existing scenario samples, each scenario sample comprising sensor data depicting a surrounding environment of a vehicle over a period of time, wherein each scenario sample is associated with a scenario embedding representing the scenario sample in a multi-dimensional space, the computing device (200) comprising control circuitry (202) configured to:
obtain an indication of an empty volume in the multi-dimensional space, wherein the empty volume is a volume not covered by the plurality of existing scenario samples of the scenario database;
transmit a data collection request in view of the empty volume to one or more vehicles of a fleet of vehicles;
receive, from a vehicle of the fleet of vehicles, data indicative of a recorded scenario matching the data collection request; and
store the received data indicative of the recorded scenario to the plurality of existing scenario samples of the scenario database.
